# EUROPEAN PATENT SPECIFICATION

(11) **EP 2 181 591 B1**
(45) Date of publication and mention of the grant of the patent: **25.01.2012**
(21) Application number: 09251768.9
(22) Date of filing: 09.07.2009
(51) Int. Cl.: A01K 97/12

(54) **Fish-bite indicator**
Fischanbissanzeigevorrichtung
Indicateur de touche pour la pêche

(30) Priority: 30.10.2008 GB 0820013
(43) Date of publication of application: 05.05.2010
(73) Proprietor: Fox International Group Limited, Hainault, Essex IG6 3UT (GB)
(72) Inventor: Taylor, Adam, Loughton, Essex IG10 2QH (GB)
(74) Representative: Crouch, David John

(56) References cited:
- EP-A1- 0 682 864
- GB-A- 2 352 382
- GB-A- 2 369 761

## Description

The present invention relates to a fish-bite indicator comprising a main body with line engagement means at an intended upper position of the main body and attachment means on the main body to enable the main body to be connected indirectly to a bankstick or other rod support means when the indicator is in use.

GB 2352382 A discloses such a construction with nested body parts.

However, a problem encountered with prior constructions of such an indicator is that the weight and/or size of the main body is not readily alterable.

The present invention seeks to provide a remedy. According to claim 1, the present invention is directed to a fish-bite indicator having the construction set out in the opening paragraph of the present specification, in which the main body comprises a plurality of nested body parts at least the outer or outermost one of which is readily removable to enable the indicator to be used with the inner or innermost main body part without the outer or outermost main body part, in which the indicator has a hanger construction, with the attachment means being at an intended lower position of the main body, and a flexible elongate part extends from the attachment means to a connector portion of the indicator for connection to a bankstick or other rod support means, so that the main body is free to move up or down with a tautening or slackening of the line when the indicator is in use, but at the same time remains connected indirectly to a bankstick or other rod support means upon a strike being made by the user, and in which the said body parts comprise a translucent material, and a light source is provided within the hollow of the inner or innermost body part when the indicator is in use.

In this way the indicator can be used with a main body of different weight and/or size, and light from the light source can pass through whichever of the nested body parts are for the time being in use.

Preferably, the light source is present and comprises a betalight.

Preferably, each of the nested body parts is generally cylindrical in form. This facilitates the nesting of the body parts.

Advantageously, the attachment means are on the inner or innermost body part.

Preferably, the attachment means comprises an externally screw-threaded shank. One end of such an elongate part can then be provided with an internally screw-threaded portion which can be screwed on to this externally screw-threaded shank.

Preferably, the line engagement means is provided with an externally screw-threaded shank.

The inner or innermost body part may be formed with an internally screw-threaded portion at an intended upper position of the body part to receive such an externally screw-threaded shank of the line engagement means.

The line engagement means may comprise two resilient arms having respective outer surfaces which are splayed relative to one another.

A sleeve may surround the line engagement means and have portions which abut the splayed surfaces and which may be displaceable upwardly or downwardly thereby to vary the force with which the ends of the two arms are urged towards one another. This in turn will vary the force required to enable the line to be released from the line engagement means.

Preferably, the sleeve has internal screw-threading which engages an external screw-threading of a shank of the line engagement means.

In a previous construction of fish-bite indicator having the construction set out in the opening paragraph of the present invention, the line engagement means comprise two resilient arms having respective outer surfaces which are splayed relative to one another. A sleeve of the line engagement means may surround the splayed outer surfaces and may be displaceable upwardly or downwardly to vary the force with which the ends of the two arms are urged towards one another. Inner surfaces of the arms are such as to provide respective points of contact at or in the region of intended upper ends of those arms where they contact one another, and respective recesses underneath those points of contact to provide a gap between the arms through which a line is free to extend and slide when the indicator is in use.

A disadvantage of such an indicator is that it does not necessarily respond in a readily detectable manner if the line slides through the gap.

A further development of the present invention seeks to provide a remedy.

Accordingly this further development of the present invention is directed to the respective inner surfaces of the two arms which provide respective straight substantially parallel regions between which a line may be gripped when the indicator is in use, relative rotation between the sleeve and the shank of the line engagement means effecting displacement of the sleeve.

This enables such displacement to be set with precision and in such a manner that it is unlikely to be accidentally altered.

The inner surfaces of the two arms may further provide respective points of contact at or in the region of enlarged intended upper ends of the two arms where they contact one another, and respective recesses underneath those points of contact to provide a gap between the arms through which a line is free to extend and slide when the indicator is in use.

Preferably, the said straight substantially parallel regions are located below the said recesses.

The internal surfaces of the two arms may provide further recesses below the said straight substantially parallel regions, to facilitate flexing of the arms.

An example of a fish-bite indicator made in accordance with the present invention will now be described with reference to the accompanying drawings, in which:
- Figure 1: shows a perspective side view of a fish- bite indicator embodying the present invention;
- Figure 2: shows a perspective side exploded view of the indicator shown in Figure 1;
- Figure 3: shows a perspective side view of the indicator shown in Figure 1 with a part thereof removed;
- Figure 4: shows a perspective side exploded view of the indicator shown in Figure 3;
- Figure 5: shows a side view of the indicator shown in Figure 1 with a flexible elongate part thereof in a straight configuration and with additional components under a main body thereof;
- Figure 6: shows a further side view of the indicator shown in Figure 5, the line of sight being at right angles to the line of sight for Figure 5;
- Figure 7: shows a cross-sectional view of the indicator shown in Figure 6 in the plane indicated by the line VI-VI shown in Figure 6;
- Figure 8: shows on a larger scale a perspective view of a part of the indicator shown in Figures 1 to 7; and
- Figure 9: shows a perspective view of a modified form of the part shown in Figure 8.

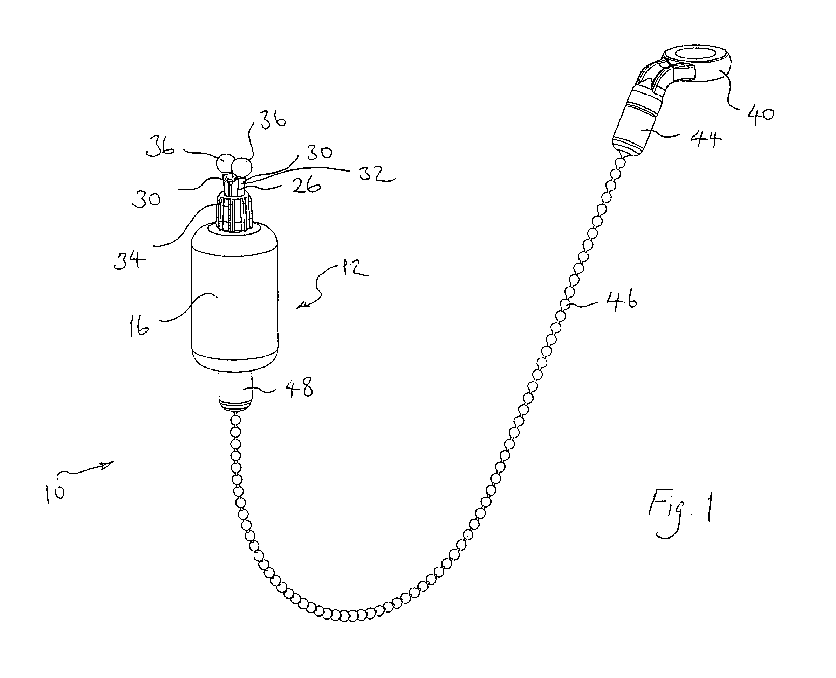

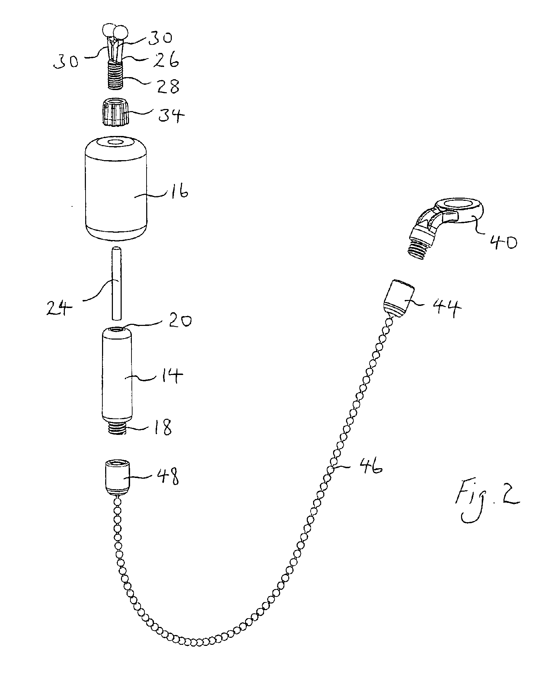

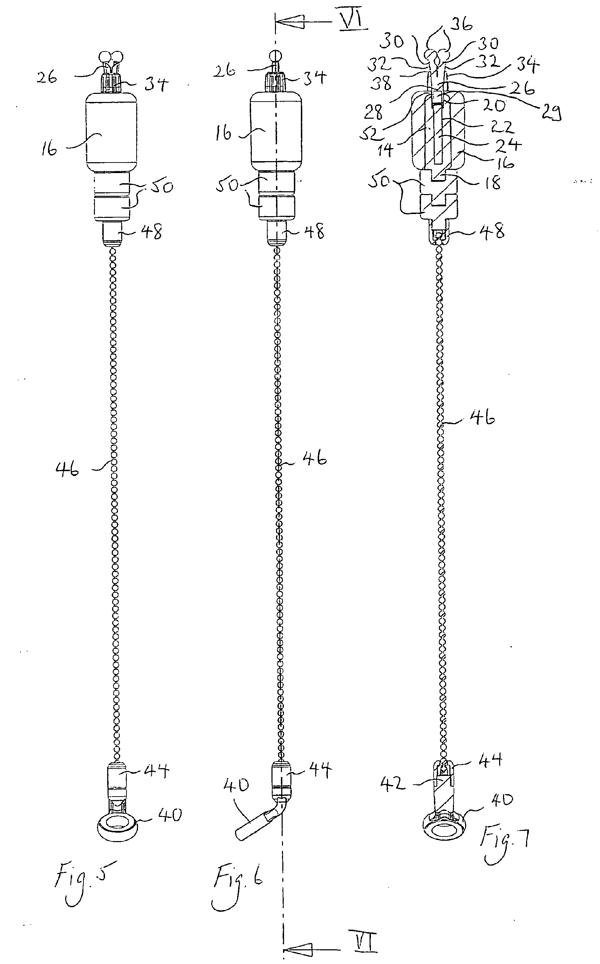

A fish-bite indicator 10 shown in Figures 1 and 2, and the variant thereof shown in Figures 5 to 7, comprises a main body 12 having a plurality of, in this case two, translucent plastics nested body parts 14 and 16. The inner body part 14 has an externally screw-threaded shank portion 18 at a lower end thereof, and an internally screw-threaded portion 20 at an upper end thereof. The inner body part 14 is hollow, having an axially extending cylindrical elongate cavity 22 within it, which receives an elongate betalight 24.

A line engagement clip 26 is provided at its base or lower end with an externally screw-threaded shank 28. The lower extremity of the shank 28 has an axially extending recess 29 which is open at the very end of the shank 28. The cavity 22 is effectively extended by the recess 29 to accommodate a high tolerance in the length of different betalights. The shank 28 engages the internal screw-threaded portion 20 of the inner body part 14. The clip 26 is provided with two arms 30 having respective outer surfaces 32 which are splayed relative to one another. A sleeve 34 has an internal screw-threaded portion which engages the externally screw-threaded shank 28 of the line engagement clip 26.

The arms 30 are resilient and are terminated by respective bulbous head portions 36. The sleeve 34 has an upper rim 38 which abuts the splayed external surfaces 32. As a result, rotation of the sleeve 34 such that it moves upwardly relative to the head portions 36 increases the force with which those portions are urged towards one another, and correspondingly, rotation of the sleeve 34 downwardly relative to these portions decreases the force with which they are urged towards one another. This therefore enables the force required to release a line trapped underneath the head portions 36 between the arms 30, to be varied.

For different settings of the sleeve 34 relative to the shank 28, the shank 28 may be screwed into the part 14 by different amounts so that the sleeve 34 always abuts that part 14, or the part 16 if that is also present. The length of the cavity 22 supplemented by the recess 29 ensures that the betalight is accommodated regardless of how far the shank 28 is screwed into the part 14.

One or more resilient bungs, for example rubber bungs (not shown), may be inserted into the recess 29 to provide a yielding cushion at the upper end of the betalight, to retain it against movement whilst avoiding damage to it for different settings of the shank 28.

A bankstick ring 40 which can be clamped to a bankstick (not shown) or other rod support device is provided with an externally screw-threaded shank 42 to which is secured an internally screw-threaded connector portion 44 at one end of an elongate flexible chain 46, the other end of which is provided with a corresponding internally screw-threaded connector 48. The latter is connected to the externally screw-threaded shank portion 18 of the inner body part 14 directly in the case of Figure 1 and indirectly through the intermediary of two further weight portions 50 in the case of the variant shown in Figures 5 to 7.

The outer body part 16 is cylindrical in shape and has a cylindrical hollow interior into which fits the inner body part 14 and an inwardly protruding rim 52 of the outer body part 16 is sandwiched between the sleeve 34 and the upper end of the inner cylindrical body part 14, to hold the outer body part 16 in place.

It will be appreciated that light from the betalight 24 is able to pass through the inner body part 14 and the outer body part 16 because of the translucent material with which these body parts are made. As a result, when the indicator is in use, movement of the main body 12 during night fishing is made clearly evident by the betalight, so that if a fish bites on a hook at the end of the line (not shown) to increase the tension in the line, the main body 12 along with the betalight 24 will move upwardly, whereas if the fish causes the line to be slackened, the body part 12 along with the betalight 24 will move downwardly. This provides the user with knowledge as to how he should make a strike.

Figure 2 shows readily how the indicator may be dismantled and subsequently reassembled. Thus, the various parts of the indicator can be taken apart by unscrewing the connector portion 44 from the ring 40, by unscrewing the connector portion 48 from the inner body part 14, by unscrewing the shank portion 28 of the line engagement clip 26 from the inner body part 14 and from the sleeve 34 to enable the outer body part 16 to be slid off the inner body part 14 and if necessary to enable the betalight 24 to be slid out from the inner body part 14. The reverse procedure can be used to reassemble the parts shown in Figure 2 to create the assembled indicator shown in Figure 1.

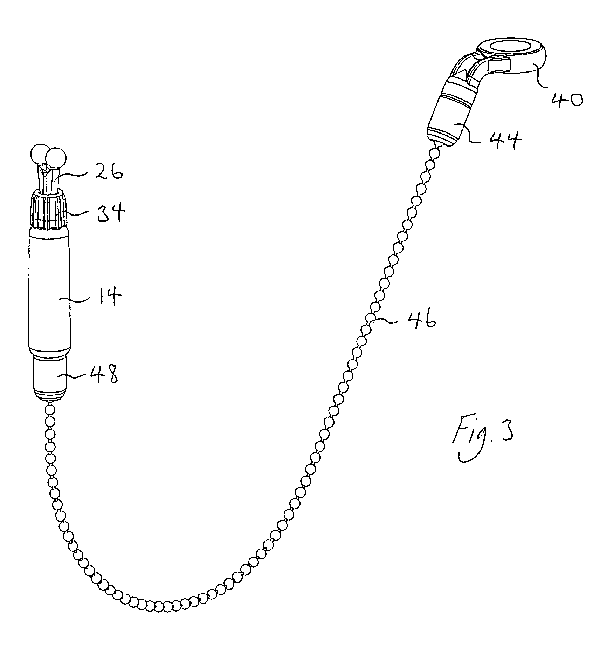

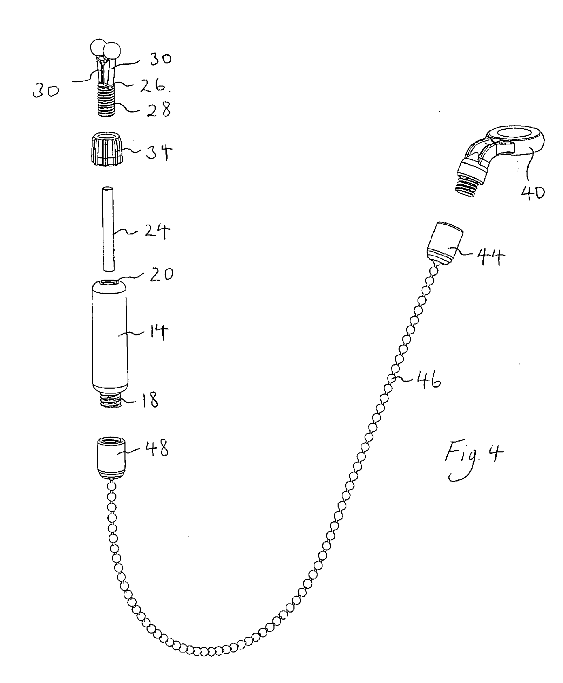

If in reassembling of the component shown in Figure 2, the outer body part 16 is omitted, the assembled indicator will appear as shown in Figure 3 functioning in precisely the same way as the indicator shown in Figure 1, but with a lighter main body 12. Dismantling and reassembling of the indicator shown in Figure 3 is as shown in Figure 4. Clearly the outer body part 16 may be replaced before reassembling to return to the configuration shown in Figure 1.

Of course, it will be appreciated that it is not necessary to completely disassemble the indicator to remove or replace the outer body part 16; it is merely necessary to unscrew the line engagement clip 26 and with it the sleeve 34 from the upper end of the inner body part 14, remove the outer body part 16 from the inner body part 14, or place it over the inner body part 14 according to whether the outer body part 16 is being removed or added, whereupon the clip 26 can be reattached to the upper end of the inner body part 14.

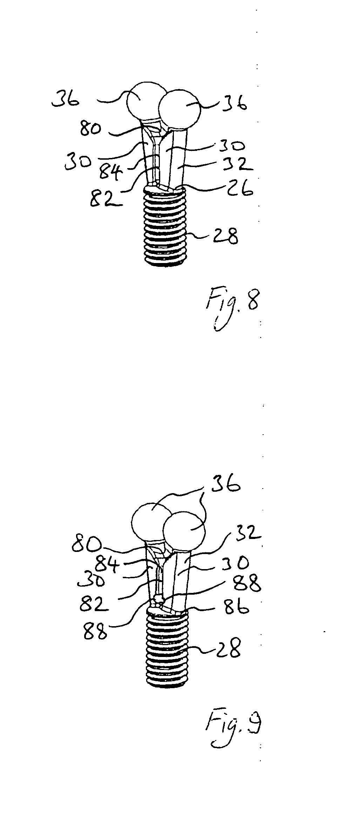

Further details of the line engagement clip 26 will now be described with reference to Figure 8. Thus beneath the points of contact where the head portions 36 contact one another, inner surfaces of the arms 30 are recessed to provide a gap 80 between the arms 30. A lower part of the gap 80, viewing the clip 26 along a tangent to the points of contact of the head portions 36, is V-shaped. The inner surfaces of the two arms 30 also provide respective straight substantially parallel regions 82 between which a fishing line may be gripped when the indicator is in use, below the gap 80. These regions thus define a slot 84. The strength of the grip is adjustable by rotation of the sleeve 34 as shown in Figures 1 to 7.

The user thus has the option of positioning a fishing line (not shown) so that it passes through the gap 80, in which case the line can slide through the clip 26, or it can be positioned in the slot 84 so that the line cannot slide or slip through the clip 26. Any movement of the line is then indicated by the same amount of movement of the clip 26.

In one modified construction of clip 86 shown in Figure 9, parts which correspond to those in the Figure 8 construction have been labelled with the same reference numerals. The difference between clips 26 and 86 is that the inner surfaces of the arms 30 of the latter are provided with respective further recesses 88 at the base of the straight parallel regions 82. This facilitates flexing of the arms 30.

Numerous variations to the illustrated indicator may occur to the reader without taking it outside the scope of the present invention. For example there may be more than two nested body parts constituting the main body 12, for example there may be an outermost translucent body part, an innermost translucent body part, and an intermediate translucent body part therebetween.

## Claims

1. A fish-bite indicator (10) comprising a main body (12) with line engagement means (26) at an intended upper position of the main body (12) and attachment means (18) on the main body (12) to enable the main body (12) to be connected indirectly to a bankstick or other rod support means when the indicator (10) is in use, in which the main body (12) comprises a plurality of nested body parts (14, 16) at least the outer or outermost one (16) of which is readily removable to enable the indicator to be used with the inner or innermost main body part (14) without the outer or outermost main body part (16), **characterised in that** the indicator has a hanger construction, with the attachment means (18) being at an intended lower position of the main body (12), and a flexible elongate portion (44) of the indicator (10) for connection to a bankstick or other rod support means, so that the main body (12) is free to move up or down with a tautening or slackening of the line when the indicator (10) is in use, but at the same time remains connected indirectly to a bankstick or other rod support means upon a strike being made by the user, and **in that** the said body parts (14, 16) comprise a translucent material, and a light source (24) is provided within the hollow of the inner or innermost body part (14) when the indicator is in use.

2. A fish-bite indicator according to claim 1, **characterised in that** the light source (24) is present within the hollow of the inner or innermost body part and comprises a betalight.

3. A fish-bite indicator according to claim 1 or claim 2, **characterised in that** each of the nested body parts (14, 16) is generally cylindrical in form.

4. A fish-bite indicator according to any preceding claim, **characterised in that** the attachment means (18) are on the inner or innermost body part (14).

5. A fish-bite indicator according to any preceding claim, **characterised in that** the line engagement means (26) is provided with an externally screw-threaded shank (28).

6. A fish-bite indicator according to claim 5, **characterised in that** the inner or innermost body part (14) is formed with an internally screw-threaded portion (20) at an intended upper position of the body part (14) to receive the externally screw-threaded shank (28) of the line engagement means (26).

7. A fish-bite indicator according to any preceding claim, **characterised in that** the line engagement means (26) comprises two resilient arms (30) having respective outer surfaces (32) which are splayed relative to one another.

8. A fish-bite indicator according to claim 7, **characterised in that** a sleeve (34) surrounds the line engagement means (26) and has portions which abut the splayed surfaces (32) and which is displaceable upwardly or downwardly thereby to vary the force with which the ends of the two arms (30) are urged towards one another.

9. A fish-bite indicator according" to claim 8 read as appended directly or indirectly to claim 5, **characterised in that** the sleeve (34) has internal screw-threading which engages the external screw-threading of the shank (28) of the line engagement means.

10. A fish-bite indicator according to claim 9, **characterized in that** respective inner surfaces of the two arms (30) provide respective straight substantially parallel regions (82) between which a line may be gripped when the indicator (10) is in use, the strength of the grip being adjustable by displacement of the sleeve (34), relative rotation between the sleeve and the shank of the line engagement means effecting displacement of the sleeve.

11. A fish-bite indicator according to claim 10, **characterised in that** the inner surfaces of the two arms (30) further provide respective points of contact at or in the region of enlarged intended upper ends (36) of the two arms (30) where they contact one another, and respective recesses underneath those points of contact to provide a gap (80) between the arms (30) through which a line is free to extend and slide when the indicator (10) is in use.

12. A fish-bite indicator according to claim 11, **characterised in that** the said straight substantially parallel regions (62) are located below the said recesses.

13. A fish-bite indicator according to claim 11 or claim 12, **characterised in that** the internal surfaces of the two arms (30) provide further recesses (88) below the said straight substantially parallel regions (82), to facilitate flexing of the arms (30).

## Patentansprüche

1. Fischanbeiß-Anzeiger (10), der einen Hauptkörper (12) umfasst, der versehen ist mit Leineneingriffmittel (26) an einer bestimmungsgemäßen oberen Position des Hauptkörpers (12) und mit Befestigungsmitteln (18) am Hauptkörper (12), um zu ermöglichen, den Hauptkörper (12) indirekt mit einem Erdspieß oder anderen Rutenhaltemitteln zu verbinden, wenn die Anzeige (10) in Gebrauch ist, wobei der Hauptkörper (12) mehrere genestete Körperteile (14, 16) umfasst, wovon wenigstens der äußere oder äußerste (16) einfach abnehmbar ist, um zu ermöglichen, den Anzeiger mit dem inneren oder innersten Hauptkörperteil (14) ohne den äußeren oder äußersten Hauptkörperteil (16) zu verwenden, **dadurch gekennzeichnet, dass** der Anzeiger eine Hängekonstruktion besitzt, wobei die Befestigungsmittel (18) an einer bestimmungsgemäßen unteren Position des Hauptkörpers (12) vorhanden sind, und einen flexiblen lang gestreckten Abschnitt (44) des Anzeigers (10) für die Verbindung mit einem Erdspieß oder anderen Rutenhaltemitteln besitzt, so dass sich der Hauptkörper (12) bei gestraffter oder durchhängender Leine beliebig nach oben oder nach unten bewegen kann, wenn der Anzeiger (10) in Gebrauch ist, jedoch gleichzeitig indirekt mit einem Erdspieß oder einem anderen Rutcnhaltemittel verbunden bleibt, wenn von dem Anwender ein Schlag ausgeführt wird, und dass die Körperteile (14, 16) ein lichtdurchlässiges Material aufweisen und eine Lichtquelle (24) innerhalb des Hohlraums des inneren oder innersten Körperteils (14) vorgesehen ist, wenn der Anzeiger in Gebrauch ist.

2. Fischanbeiß-Anzeiger nach Anspruch 1, **dadurch gekennzeichnet, dass** die Lichtquelle (24) in dem Hohlraum des inneren oder innersten Körperteiles vorhanden ist und ein Betalight umfasst.

3. Fischanbeiß-Anzeiger nach Anspruch 1 oder Anspruch 2, **dadurch gekennzeichnet, dass** jeder der genesteten Körperteile (14, 16) eine im Allgemeinen zylindrische Form hat.

4. Fisehanbeiß-Anzeiger nach einem vorhergehenden Anspruch, **dadurch gekennzeichnet, dass** sich die Befestigungsmittel (18) an dem inneren oder innersten Körperteil (14) befinden.

5. Fischaubeiß-Anzeiger nach einem vorhergehenden Anspruch, **dadurch gekennzeichnet, dass** die Leineneingriffmittel (26) mit einem mit einem Außengewinde versehenen Schaft (28) versehen sind.

6. Fischanbeiß-Anzeiger nach Anspruch 5, **dadurch gekennzeichnet, dass** der innere oder innerste Körperteil (14) an seiner bestimmungsgemäßen oberen Position des Körperteils (14) mit einem mit einem Innengewinde versehenen Abschnitt (20) ausgebildet ist, um den mit einem Außengewinde versehenen Schaft (28) der Leineneingriffmittel (26) aufzunehmen.

7. Fischanbeiß-Anzeiger nach einem vorhergehenden Anspruch, **dadurch gekennzeichnet, dass** die Leineneingriffmittel (26) zwei elastische Arme (30) aufweisen, die jeweilige äußere Oberflächen (32) besitzen, die relativ zueinander ausgebreitet sind.

8. Pischanbeiß-Anzeigcr nach Anspruch 7, **dadurch gekennzeichnet, dass** eine Hülse (34) die Leineneingriffmittel (26) umgibt und Abschnitte besitzt, die an den ausgebreiteten Oberflächen (32) anliegen, und die nach oben oder nach unten verlagerbar ist, um die Kraft zu verändern, mit der die Enden der zwei Arme (30) gegeneinander gedrängt werden.

9. Fischanbeiß-Anzeiger nach Anspruch 8, wenn direkt oder indirekt abhängig von Anspruch 5, **dadurch gekennzeichnet, dass** die Hülse (34) ein Innengewinde besitzt, das mit dem Außengewinde des Schafts (28) der Leineneingriffmittel in Eingriff ist.

10. FischanbeiB-Anzeiger nach Anspruch 9, **dadurch gekennzeichnet, dass** die jeweiligen inneren Oberflächen der zwei Arme (30) jeweilige geradlinige, im Wesentlichen parallele Bereiche (82) schaffen, zwischen denen eine Leine ergriffen werden kann, wenn der Anzeiger (10) in Gebrauch ist, wobei die Festigkeit des Griffs durch Verlagern der Hülse (34) einstellbar ist, wobei eine relative Drehung zwischen der Hülse und dem Schaft der Leineneingriffmittel eine Verlagerung der Hülse bewirkt.

11. Fischanbeiß-Anzeiger nach Anspruch 10, **dadurch gekennzeichnet, dass** die inneren Oberflächen der zwei Arme (30) ferner jeweilige Kontaktpunkte bei oder in dem Bereich erweiterter bestimmungsgemäßer oberer Enden (36) der zwei Arme (30) schaffen, wenn sie miteinander in Kontakt sind, und jeweilige Aussparungen unter diesen Kontaktpunkten schaffen, um einen Spalt (80) zwischen den Armen (30) zu schaffen, durch den sich eine Leine frei erstrecken kann und gleiten kann, wenn der Anzeiger (10) in Gebrauch ist.

12. Fischanbciß-Anzeiger nach Anspruch 11, **dadurch gekennzeichnet, dass** sich die geradlinigen, im Wesentlichen parallelen Bereiche (82) unter den Aussparungen befinden.

13. Fischanbeiß-Anzeiger nach Anspruch 11 oder Anspruch 12, **dadurch gekennzeichnet, dass** die inneren Oberflächen der zwei Arme (30) weitere Aussparungen (88) unter den geradlinigen, im Wesentlichen parallelen Bereichen (82) schaffen, um ein Biegen der Arme (30) zu erleichtern.

## Revendications

1. Indicateur de touche pour la pêche (10), comprenant un corps principal (12) avec des moyens de mise en prise de ligne (26), en une position supérieure prévue du corps principal (12), et des moyens de fixation (18) sur le corps principal (12) de manière à permettre au corps principal (12) d'être relié indirectement à un piquet de rive ou d'autres moyens supports de canne, lorsque l'indicateur (10) est en utilisation, dans lequel le corps principal (12) comprend une pluralité de parties de corps (14, 16) imbriquées, dont au moins l'une (16), en situation extérieure ou la plus extérieure, peut être aisément enlevée de manière à permettre à l'indicateur d'être utilisé avec la partie de corps principal (14) intérieure ou la plus intérieure, sans la partie de corps principal (16) extérieure ou la plus extérieure, **caractérisé en ce que** l'indicateur présente une construction suspendue, les moyens de fixation (18) étant en une position inférieure prévue du corps principal (12), et une partie allongée (44) flexible de l'indicateur (10) étant prévue pour connexion à un piquet de rive ou à d'autres moyens supports-de canne, de manière que le corps principal (12) soit libre de se déplacer en levée ou en descente avec une mise sous tension mécanique ou un relâchement de la ligne lorsque l'indicateur (10) est en utilisation, mais, en même temps, reste connecté indirectement à un piquet de rive ou à d'autres moyens supports de canne lorsqu'un ferrage est effectué par l'utilisateur, et **en ce que** lesdites parties de corps (14, 16) comprennent un matériau translucide, et une source de lumière (24) est prévue à l'intérieur de la cavité de la partie de corps (14) intérieure ou la plus intérieure, lorsque l'indicateur est en utilisation.

2. Indicateur de touche pour la pêche selon la revendication 1, **caractérisé en ce que** la source de lumière (24) est disposée dans la cavité de la partie de corps intérieure ou la plus intérieure et comprend une lumière béta.

3. Indicateur de touche pour la pêche selon la revendication 1 ou la revendication 2, **caractérisé en ce que** chacune des parties de corps (14, 16) imbriquées est de forme globalement cylindrique.

4. Indicateur de touche pour la pêche selon l'une quelconque des revendications précédentes, **caractérisé en ce que** les moyens de fixation (18) sont situés sur la partie de corps (14) intérieure ou la plus intérieure.

5. Indicateur de touche pour la pêche selon l'une quelconque des revendications précédentes, **caractérisé en ce que** les moyens de mise en prise de ligne (26) sont munis d'une queue (28) filetée extérieurement.

6. Indicateur de touche pour la pêche selon la revendication 5, **caractérisé en ce que** la partie de corps (14) intérieure ou la plus intérieure est munie d'une partie intérieurement taraudée (20) en une position supérieure prévue de la partie de corps (14), pour recevoir la queue (28) filetée extérieurement des moyens de mise en prise de ligne (26).

7. Indicateur de touche pour la pêche selon l'une quelconque des revendications précédentes, **caractérisé en ce que** les moyens de mise en prise de ligne (26) comprennent deux bras (30) élastiques ayant des surfaces extérieures (32) respectives écartées les unes par rapport aux autres.

8. Indicateur de touche pour la pêche selon la revendication 7, **caractérisé en ce qu'**une douille (34) entoure les moyens de mise en prise de ligne (26) et comprend des parties venant en butée avec les surfaces écartées (32) et est déplaçable vers le haut ou vers le bas, de manière à faire varier la force avec laquelle les extrémités des deux bras (30) sont sollicitées les unes vers les autres.

9. Indicateur de touche pour la pêche selon la revendication 8, dépendant directement ou indirectement de la revendication 5, **caractérisé en ce que** la douille (34) comprend un taraudage interne venant en prise avec le filetage extérieur de la queue (28) des moyens de mise en prise de ligne.

10. Indicateur de touche pour la pêche selon la revendication 9, **caractérisé en ce que** des surfacer intérieures respectives des deux bras (30) fournissent des régions rectilignes (82) sensiblement parallèles respectives, entre lesquelles une ligne peut être agrippé lorsque l'indicateur (10) est en utilisation, la force de l'agrippement étant ajustable par le biais d'un déplacement de la douille (34), une rotation relative entre la douille et la queue des moyens de mise en prise de ligne produisant un déplacement de la douille.

11. Indicateur de touche pour la pêche selon la revendication 10, **caractérisé en ce que** les surfaces intérieures des deux bras (30) fournissent en outre des points de contact respectifs à ou dans la région d'extrémités supérieures (36) agrandies, prévues, des deux bras (30), où elles sont en contact les unes avec les autres, et des cavités respectives en dessous de ces points de contact, pour fournir, entre les bras (30), un intervalle (80) à travers lequel une ligne est libre de s'étendre et de coulisser lorsque l'indicateur (10) est en utilisation.

12. Indicateur de touche pour la pêche selon la revendication 11, **caractérisé en ce que** les régions rectilignes (82) sensiblement parallèles sont situées au-dessous desdites cavités.

13. Indicateur de touche pour la pêche selon la revendication 11 ou la revendication 12, **caractérisé en ce que** les surfaces internes des deux bras (30) fournissent d'autres cavités (88) au-dessous desdites régions (82) rectilignes sensiblement parallèles, de manière à faciliter la flexion des bras (30).
